# EUROPEAN PATENT SPECIFICATION

(11) **EP 2 106 701 B1**
(45) Date of publication and mention of the grant of the patent: **16.01.2013**
(21) Application number: 09004798.6
(22) Date of filing: 01.04.2009
(51) Int. Cl.: A21C 11/00

(54) **Apparatus for controlled processing of food dough**
Vorrichtung zur gesteuerten Verarbeitung von Nahrungsmittelteig
Dispositif pour le traitement contrôlé de pâte alimentaire

(30) Priority: 03.04.2008 IT VI20080081
(43) Date of publication of application: 07.10.2009
(73) Proprietor: Iteca S.p.A., 37050 Palù (VR) (IT)
(72) Inventor: Benetti, Luigi, 37031 Illasi (Verona) (IT)
(74) Representative: Autuori, Angelo

(56) References cited:
- EP-A1- 0 780 052
- EP-A1- 1 520 475
- EP-A1- 1 889 541
- WO-A1-2006/030454
- US-A- 5 112 208

## Description

### Field of the invention

The present invention finds application in the field of automatic continuous industrial plants for food production.

Particularly, the present invention relates to an apparatus for controlled processing of dough, of the type comprising a sheeting device for forming the dough into a disk-shaped element of predetermined thickness and diameter.

The present invention also relates to a method for controlled processing of dough to form it into a disk-shaped element of predetermined thickness and diameter, and to a computer program product suitable to be installed in the memory of a computer used for controlling the above apparatus.

### Background art

Implementation of homemade dough processing in an industrial process is known to require mechanical equipment to be adapted to the product and not vice versa. Otherwise, industrially implemented recipes, a word that is intended herein to indicate the whole product making process and not simply its ingredients, would lead to a product different from the original homemade product.

It is generally difficult, if not impossible, to emulate all human process steps using a mechanical apparatus, and this entails compromise solutions, which might cause alterations from the original recipe.

For these reasons, it is common practice to calibrate each apparatus to fit a particular recipe, to obtain the desired result. Nevertheless, as the customization level increases, the apparatus loses its flexibility.

A typical example of dough processing is for making pizza. The difficulty to emulate homemade production is self-evident in this case. Particularly, the process for obtaining a pizza base to be topped is particularly complex when implemented by an apparatus. The apparatus is required to press a dough ball into a disk-shaped element of predetermined thickness and diameter.

Several different apparatus are known for preparing a pizza base, all of which include a device for sheeting a dough composed of the desired ingredients. Such sheeting device uses mechanical members to reproduce the pizza maker movements to stretch the dough ball into the disk-shaped element.

Nevertheless, it is known that each manufacturer uses its own doses to make the dough, thereby characterizing both the organoleptic properties and the physical characteristics of consistency and elasticity thereof.

It will be intuitively understood that, for example, a dough with a greater amount of water will be softer and easier to process than a drier dough, which offers a greater resistance to deformation.

The relation of the amount of dough to the size of the pizza base will be also intuitively understood. Particularly, a greater amount of material will lead to an increased thickness of the pizza base or an increased diameter or both.

All these variables are handled by the pizza maker as he/she manually forms the disk-element, by appropriate force and movement control to obtain the desired size.

In an industrial process implemented by a special apparatus of known type, the devices that compose the apparatus, and namely the sheeting device, are manually adjusted during the installation of the apparatus, according to the recipe.

The only adjustment parameter in prior art sheeting devices is sheeting height, which sets the thickness of the resulting disk-shaped element and only as a consequence, its diameter. Some examples are described in EP 1 889 541 and in EP 1 520 475. Thus, while sheeting achieves its mechanical thickness-reducing purpose, no processing force parameter is provided, and there is no consideration of possible product alterations caused by excessive deformation.

Indeed, a critical technological requirement for the dough is that it should not be excessively stressed during processing. Excessive stresses might cause irreversible changes in the physical and organoleptic properties of the dough being processed.

Furthermore, prior art sheeting devices lack flexibility and are not suitable to fit quick recipe changes imposed by market requirements. Particularly, any change in the diameter and thickness of the disk-shaped element may be of difficult implementation and require the intervention of those that made and installed the apparatus.

These changes may be imposed not only by market requirements of having pizzas of different sizes but also for changes in the doses of dough ingredients to impart different consistency and elasticity. Thus, the sheeting stress should be desirably varied to obtain the desired thickness and diameter.

As mentioned above, this is particularly difficult in prior art sheeting devices which have been already defined as poorly flexible.

### Disclosure of the invention

The main object of this invention is to overcome the above drawbacks, by providing an apparatus for controlled processing of dough that can adapt its operating parameters to recipe changes.

Particularly, the object of the present invention is to provide an apparatus that can be easily adapted to any change in the doses or ingredients of the dough, as well as in its desired size.

Another object of the present invention is to provide an apparatus that allows real-time monitoring of the sizes of the disk-shaped element obtained thereby, to check that the deformation of the dough does not alter its physical and organoleptic properties.

Also, a particular object of the present invention is to provide an apparatus that allows automatic adjustment of the sheeting process if a size other than the desired size is detected during monitoring.

These and other objects, as better explained hereafter, are fulfilled by an apparatus for controlled processing of dough as defined in claim 1.

Particularly, the apparatus comprises at least one sheeting device susceptible if interacting with a portion of dough to form it into a substantially disk-shaped element of predetermined thickness and diameter, and is characterized in that it comprises size detection means for checking said thickness and said diameter of said disk-shaped element of dough, which are located downstream from said sheeting device.

In one aspect of the invention, the sheeting device is operatively connected to a controller which comprises a programmable computer, for controlling its operation. The size detection means are also connected to such controller.

This advantageously allows automated change of the sheeting parameters, of the size of the disk-shaped element is not as desired.

Such change is made in real time and can also fit changes in the doses and ingredients of the dough without requiring adjustments on the apparatus.

According to another aspect of the invention, the sheeting device comprises at least one lower sheeting element and at least one upper sheeting element with the portion of dough to be sheeted being inserted therebetween.

Actuator means are also provided, which are operatively associated with at least one of the upper and lower sheeting elements to move it either towards or away from the other with a predetermined compressive force.

Thus, a possible embodiment might include actuator means associated with the upper sheeting element, whereas the lower sheeting element includes at least one surface plate. These actuator means may be thus connected to the controller that controls their operation.

For more flexible adjustment of the apparatus, elastic means may be also provided beneath the surface plate.

As mentioned above, the present invention also relates to a method for controlled processing of dough to form a portion of dough into a disk-shaped element of predetermined thickness and diameter.

This method is implemented by the above described apparatus and includes the steps of:
- introducing a portion of dough into the sheeting device;
- detecting the thickness and average diameter of the disk-shaped element using size detection means located downstream from the sheeting device;
- controlling the sheeting parameters, such as sheeting force, gap between the sheeting elements and sheeting speed of the sheeting device for adjusting the thickness and average diameter of the disk-shaped element to the desired values.

According to another aspect of the invention, the method is implemented by a computer program product comprising software code portions, which is designed to be installed in the memory of the programmable computer that is part of the controller of the apparatus.

### Brief description of the drawings

Further characteristics and advantages of the invention will be more apparent upon reading of the detailed description of a few preferred, non-exclusive embodiments of an apparatus for controlled processing of dough according to the invention, which are described as non-limiting examples with the help of the annexed drawings, in which:
Fig. 1 is a side view of an apparatus for controlled processing of dough according to the invention;
FIGS. 2 and 3 show construction details of the apparatus of FIG. 1.

### Detailed description of a preferred embodiment

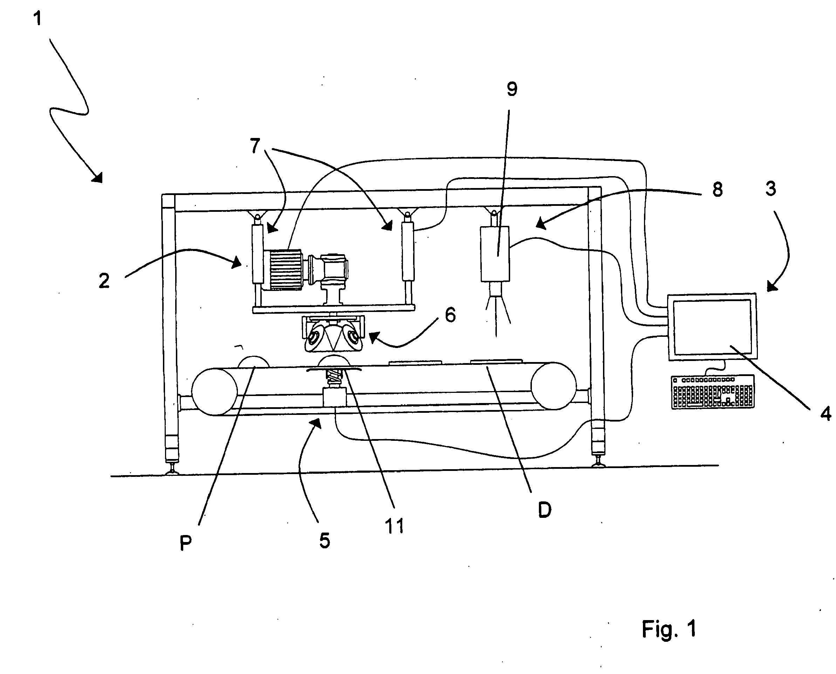

Referring to Fig. 1, there is shown an apparatus for controlled processing of dough, generally designated by numeral 1. It particularly comprises at least one sheeting device susceptible of interacting with a portion of dough P to form it into a substantially disk-shaped element D of predetermined thickness and diameter.

In one aspect of the invention, the sheeting device 2 is generally operatively connected to a controller 3 which controls its operation. Such controller is expected to include a programmable computer 4.

Concerning the sheeting device 1, in a preferred embodiment, as described hereinbelow, it comprises at least one lower sheeting element 5 and at least one upper sheeting element 6 disposed on each side of the portion of dough P.

Actuator means 7 are also provided, which are operatively associated with at least one of the upper 6 and lower 5 sheeting elements to move it either towards or away from the other of these sheeting elements 5, 6 with a predetermined compressive force. Thus, a dual control is exerted on the sheeting device 2, i.e. on the gap between the sheeting elements 5, 6 and the increasing compressive force exerted thereby.

Particularly, the controller 3 is designed to interact with the actuator means 7 to control the amount of compressive force and the gap between the sheeting elements 5, 6.

For this purpose, the actuator means 7 are generally selected from the group comprising mechanical, hydraulic, pneumatic, electric jacks.

The term gap as used herein is obviously intended to indicate the distance between the sheeting elements 5, 6 at least in operation, i.e. during sheeting.

According to a variant embodiment of the invention, the two sheeting elements may be stationary during sheeting or consist, for instance, of a pair of rotating rollers. In this case, the thickness of the disk-shaped element is not obtained by adjusting the force with which the sheeting elements are pressed towards each other, but by adjusting the gap between such sheeting elements before sheeting.

In any case, adjustment of the compressive force and the gap between the sheeting elements are only two examples of how sheeting may be controlled.

According to the invention, the apparatus 1 for processing dough P comprises size detection means 8 for checking the thickness and diameter of the disk-shaped element D of dough P.

Thickness is checked once if it is required to be constant throughout the disk-shaped element. However, if the disk-shaped element is designed to have an uneven thickness, such thickness check may be performed at multiple locations.

The size detection means 8 are located downstream from the sheeting device 2 and are preferably operatively connected to the controller 3 to assist an operator in controlling the operation of the sheeting device 2. They also generally include one or more cameras 9 and/or one or more sensors that may be, for instance, of electric, electronic and/or optical type.

Instead of being controlled by an operator, the sheeting device 2 may be also designed to be automatically controlled by a controller 3 through a computer program product, particularly a program, adapted to be installed in the memory of the computer 4 for controlling the apparatus 1 disclosed herein and comprising software code portions for implementing the method of operation of the apparatus 1 when the program is run by the computer 4. Such program will be adapted to receive the sizes of the disk-shaped element D from the detection means 8 and consequently control the operation of the actuator means 7.

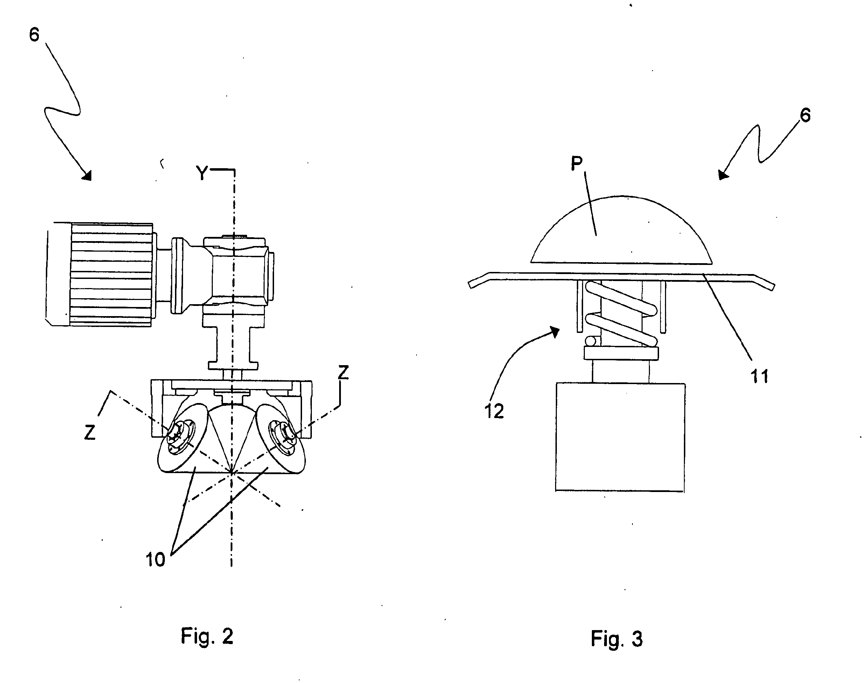

In one aspect of the invention, the upper sheeting element 6 comprises, as shown in the detail of Fig. 2, a plurality of cones 10 rotating about a substantially vertical axis Y. Each of these cones 10 also rotates about an oblique axis Z for interaction with the dough P.

This embodiment, which is only intended by way of example and shall not exclude other different embodiments, is particularly convenient in that it provides substantially circular disk-shaped elements of substantially even thickness in a short time.

Also, this embodiment provides an additional sheeting adjustment parameter, i.e. the speed of rotation of the cones 10. Since the dough is known to be prone to stick with the cones 10, the control of the speed of rotation of the latter about the vertical axis Y and the oblique axes Z provides control on their sheeting action.

Concerning the lower sheeting element 5, in the simplest embodiment it includes at least one surface plate 11.

Nevertheless, in another aspect of the invention, elastic means 12 are also provided, as shown in the detail of Fig. 3, beneath such surface plate 11, allowing motion thereof in at least one direction substantially orthogonal to the plate 11.

Thus, an additional element for controlling the compressive force of the sheeting element 2 is provided. Particularly, the elasticity and stroke of the elastic means may be adjusted for the surface plate 11 to yield upon exertion of an excess of compressive force by the upper sheeting element 6. Thus, the lower sheeting element 5 may be also expected to be connected to the controller 3, at least for detection of the compressive force exerted thereon. Nevertheless, the controller 3 may be also designed to control the elasticity and maximum stroke of the elastic means 12.

As anticipated above, the disk-shaped element may be also required to be of uneven thickness. In this case, in a possible variant embodiment the surface plate is specially shaped. An example thereof is a slightly conical or frustoconical surface plate to obtain a pizza base like those formed by pizza makers, in which manual processing causes thickness to increase from the center to the edge.

The operation of the apparatus 1 includes a first step in which a portion of dough P is introduced into the sheeting device 2 between the upper 6 and the lower 5 sheeting elements.

After sheeting, the size detection means 8 measure the thickness and average diameter of the disk-shaped element D so obtained and transmit such values to the controller.

These values are processed by the programmable computer 4 to cause a reaction if they differ from the desired values.

If the selected embodiment involves an action by an operator, the measured values are simply displayed in comparison with the desired values, for the operator to have enough information to operate at least on the actuator means 7, or even on the elastic means 12, to appropriately adjust the sheeting parameters, e.g. by controlling the compressive force exerted on the dough P.

Nevertheless, as mentioned above, this control and adjustment step may be automated by directly connecting the controller 3 to the actuator means 7 and the elastic means 12 for direct control and automatic change of these sheeting parameters.

In this case, any change in ingredient doses that may affect the elasticity and compression resistance of the dough P will cause an automated response and adaptation of the apparatus 1.

If the change requires sheeting parameter values that the apparatus is unable to provide, an error message shall be issued, and processing will be immediately stopped.

The above disclosure clearly shows that the apparatus for controlled processing of dough according to the invention, including the processing method and the computer program product for its implementation, fulfils all the intended objects and particularly allows easy adaptation of the operation parameters to recipe changes.

Namely, the apparatus can be easily adapted to any change in the doses or ingredients of the dough, as well as in its desired size.

The present apparatus will certainly allow real-time monitoring of the size of the disk-shaped element obtained thereby to ascertain whether the deformation of the dough has altered the physical and organoleptic properties thereof, and also provides automatic adjustment of the sheeting process if a size other than the desired size is detected during monitoring.

It shall be understood that the apparatus of the invention, as well as the method and the computer program product provided therewith, are susceptible of a number of changes and variants in addition to those mentioned above, within the inventive principle as disclosed in the appended claims.

Furthermore, all the details may be replaced by technically equivalent elements or steps, and any size, shape and material may be used according to various needs.

## Claims

1. An apparatus for controlled processing of dough (P), which comprises at least one sheeting device (2) susceptible of interacting with a portion of dough (P) to form it into a substantially disk-shaped element (D) of predetermined thickness and diameter, **characterized by** comprising size detection means (8) for checking said thickness and said diameter of said disk-shaped element (D) of dough (P), which are located downstream from said sheeting device (2).

2. Apparatus as claimed in claim 1, **characterized in that** said sheeting device (2) is operatively connected to a controller (3) suitable to control operation thereof, wherein said controller (3) comprises a programmable computer (4).

3. Apparatus as claimed in claim 2, **characterized in that** said size detection means (8) are operatively connected to said controller (3).

4. Apparatus as claimed in any preceding claim, **characterized in that** said sheeting device (2) comprises at least one lower sheeting element (5) and at least one upper sheeting element (6) disposed on each side of said portion of dough (P).

5. Apparatus as claimed in claim 4, **characterized by** comprising actuator means (7) operatively associated with at least one of said upper (6) or lower (5) sheeting elements to move it either towards or away from the other of said sheeting elements (5, 6) with a predetermined compressive force.

6. Apparatus as claimed in claim 5, **characterized in that** said controller (3) interacts with said actuator means (7) to control the amount of said compressive force.

7. Apparatus as claimed in claim 5 or 6, **characterized in that** said actuator means (7) are selected from the group comprising mechanical, hydraulic, pneumatic, electric jacks.

8. Apparatus as claimed in any claim from 4 to 7, **characterized in that** said upper sheeting element (6) comprises a plurality of cones (10) rotating about a substantially vertical axis (Y), each of said cones (10) also rotating about an oblique axis (Z) to interact with said dough (P).

9. Apparatus as claimed in any claim from 4 to 8, **characterized in that** said lower sheeting element (5) comprises at least one surface plate (11) and elastic means (12) disposed below said surface plate (11) to allow motion thereof in at least one direction substantially orthogonal to said surface plate (11).

10. Apparatus as claimed in any preceding claim, **characterized in that** said detection means (8) include one or more cameras.

11. Apparatus as claimed in any preceding claim, **characterized in that** said detection means (8) include one or more sensors.

12. A method for controlled processing of dough (P), to form a portion of dough (P) into a disk-shaped element (D) of predetermined thickness and diameter, using an apparatus (1) as claimed in any preceding claim, **characterized in that** it comprises the steps of:
- introducing a portion of dough (P) into said sheeting device (2) of said apparatus (1);
- detecting the thickness and the average diameter of said disk-shaped element (D) using size detection means (8) located downstream from said sheeting device (2);
- controlling the sheeting parameters of said sheeting device (2) to adjust the thickness and the average diameter of said disk-shaped element (D) to obtain desired values for said sizes.

13. Sheeting method as claimed in claim 12, **characterized in that** said sheeting device (2) comprises at least one lower sheeting element (5) and at least one upper sheeting element (6) which operate on the opposite sides of said portion of dough (P) to perform said sheeting.

14. Sheeting method as claimed in claim 12 or 13, **characterized in that** said control step includes the adjusting of the operation of actuator means (7) suitable to moving said upper sheeting element (6).

15. Sheeting method as claimed in any claim from 12 to 14, **characterized in that** said control step includes adjustment of elastic means (12) associated with the lower sheeting element (5) of said apparatus (1).

16. Sheeting method as claimed in any claim from 12 to 15, **characterized in that** said parameters to be controlled include one or more parameters selected from sheeting force, gap between said lower sheeting element (5) and said upper sheeting element (6), sheeting speed.

## Patentansprüche

1. Einrichtung zum gesteuerten Bearbeiten von Teig (P), umfassend wenigstens eine Stempelvorrichtung (2), die imstande ist, mit einer Teigportion (P) zusammenzuwirken, um diese in ein im Wesentlichen scheibenförmiges Element (D) mit vorbestimmter Dicke und vorbestimmtem Durchmesser zu formen, **dadurch gekennzeichnet, dass** sie Mittel zur Größenerfassung (8) zum Prüfen der Dicke und des Durchmessers des scheibenförmigen Elements (D) aus Teig (P) umfasst, die der Stempelvorrichtung (2) nachgelagert sind.

2. Einrichtung nach Anspruch 1, **dadurch gekennzeichnet, dass** die Stempelvorrichtung (2) betriebswirksam mit einer Steuerung (3) verbunden ist, die dafür geeignet ist, deren Betrieb zu steuern, wobei die Steuerung (3) einen programmierbaren Computer (4) umfasst.

3. Einrichtung nach Anspruch 2, **dadurch gekennzeichnet, dass** die Mittel zur Größenerfassung (8) betriebswirksam mit der Steuerung (3) verbunden sind.

4. Einrichtung nach einem der vorhergehenden Ansprüche, **dadurch gekennzeichnet, dass** die Stempelvorrichtung (2) wenigstens ein unteres Stempelelement (5) und wenigstens ein oberes Stempelelement (6) umfasst, die auf jeder Seite der Teigportion (P) angeordnet sind.

5. Einrichtung nach Anspruch 4, **dadurch gekennzeichnet, dass** sie Betätigungsmittel (7) umfasst, die mit wenigstens einem der oberen (6) oder unteren (5) Stempelelemente betriebswirksam verbunden sind, um es entweder zum anderen hin oder vom anderen der Stempelelemente (5, 6) mit einer vorbestimmten Druckkraft weg zu bewegen.

6. Einrichtung nach Anspruch 5, **dadurch gekennzeichnet, dass** die Steuerung (3) mit den Betätigungsmitteln (7) zusammenwirkt, um die Höhe der Druckkraft zu steuern.

7. Einrichtung nach Anspruch 5 oder 6, **dadurch gekennzeichnet, dass** die Betätigungsmittel (7) aus der Gruppe, umfassend mechanische, hydraulische, pneumatische, elektrische Heber, gewählt werden.

8. Einrichtung nach einem der Ansprüche 4 bis 7, **dadurch gekennzeichnet, dass** das obere Stempelelement (6) mehrere Kegel (10) umfasst, die sich um eine im Wesentlichen vertikale Achse (Y) drehen, wobei sich jeder der Kegel (10) ebenfalls um eine schiefe Achse (Z) dreht, um mit dem Teig (P) zusammenzuwirken.

9. Einrichtung nach einem der Ansprüche 4 bis 8, **dadurch gekennzeichnet, dass** das untere Stempelelement (5) wenigstens eine Auflageplatte (11) und elastische Mittel (12) umfasst, die unter der Auflageplatte (11) angeordnet sind, um deren Bewegung in wenigstens eine Richtung zu ermöglichen, die im Wesentlichen im rechten Winkel zur Auflageplatte (11) verläuft.

10. Einrichtung nach einem der vorhergehenden Ansprüche, **dadurch gekennzeichnet, dass** die Erfassungsmittel (8) eine oder mehrere Kameras umfassen.

11. Einrichtung nach einem der vorhergehenden Ansprüche, **dadurch gekennzeichnet, dass** die Erfassungsmittel (8) einen oder mehrere Sensoren umfassen.

12. Verfahren zum gesteuerten Bearbeiten von Teig (P), um eine Teigportion (P) in ein scheibenförmiges Element (D) mit vorbestimmter Dicke und vorbestimmtem Durchmesser zu formen, wobei eine Einrichtung (1) nach einem der vorhergehenden Ansprüche verwendet wird, **dadurch gekennzeichnet, dass** es folgende Schritte umfasst:
- Einführen einer Teigportion (P) in die Stempelvorrichtung (2) der Einrichtung (1);
- Erfassen der Dicke und des durchschnittlichen Durchmessers des scheibenförmigen Elements (D) mit Hilfe von Mitteln zur Größenerfassung (8), die der Stempelvorrichtung (2) nachgelagert angeordnet sind;
- Steuern der Stempelparameter der Stempelvorrichtung (2) zum Anpassen der Dicke und des durchschnittlichen Durchmessers des scheibenförmigen Elements (D), um die gewünschten Werte für die Größen zu erhalten.

13. Stempelverfahren nach Anspruch 12, **dadurch gekennzeichnet, dass** die Stempelvorrichtung (2) wenigstens ein unteres Stempelelement (5) und wenigstens ein oberes Stempelelement (6) umfasst, die auf den jeweils gegenüberliegenden Seiten der Teigportion (P) agieren, um den Stempelvorgang auszuführen.

14. Stempelverfahren nach Anspruch 12 oder 13, **dadurch gekennzeichnet, dass** der Schritt des Steuerns das Anpassen des Betriebs der Betätigungsmittel (7) umfasst, so dass sie geeignet sind, das obere Stempelelement (6) zu bewegen.

15. Stempelverfahren nach einem der Ansprüche 12 bis 14, **dadurch gekennzeichnet, dass** der Schritt des Steuerns die Anpassung der elastischen Mittel (12) umfasst, die mit dem unteren Stempelelement (5) der Einrichtung (1) verbunden sind.

16. Stempelverfahren nach einem der Ansprüche 12 bis 15, **dadurch gekennzeichnet, dass** die zu steuernden Parameter einen oder mehrere Parameter umfassen, die aus Stempelkraft, Abstand zwischen unterem Stempelelement (5) und oberem Stempelelement (6) und Stempelgeschwindigkeit gewählt werden.

## Revendications

1. Appareil pour le traitement commandé de pâte (P), qui comprend au moins un dispositif de formation de feuille (2) prédisposé à présenter une interaction avec une portion de pâte (P) pour la former en un élément sensiblement en forme de disque (D) d'épaisseur et de diamètre prédéterminés, **caractérisé en ce qu'**il comprend des moyens de détection de taille (8) pour contrôler ladite épaisseur et ledit diamètre dudit élément en forme de disque (D) de pâte (P), qui sont positionnés en aval dudit dispositif de formation de feuille (2).

2. Appareil selon la revendication 1, **caractérisé en ce que** ledit dispositif de formation de feuille (2) est connecté fonctionnellement à un dispositif de commande (3) approprié pour commander son fonctionnement, dans lequel ledit dispositif de commande (3) comprend un ordinateur programmable (4).

3. Appareil selon la revendication 2, **caractérisé en ce que** lesdits moyens de détection de taille (8) sont connectés fonctionnellement audit dispositif de commande (3).

4. Appareil selon une quelconque revendication précédente, **caractérisé en ce que** ledit dispositif de formation de feuille (2) comprend au moins un élément inférieur de formation de feuille (5) et au moins un élément supérieur de formation de feuille (6) disposés de chaque côté de ladite portion de pâte (P).

5. Appareil selon la revendication 4, **caractérisé en ce qu'**il comprend des moyens actionneurs (7) associés fonctionnellement à au moins un desdits éléments supérieur (6) ou inférieur (5) de formation de feuille pour le rapprocher ou l'éloigner de l'autre desdits éléments de formation de feuille (5, 6) avec une force de compression prédéterminée.

6. Appareil selon la revendication 5, **caractérisé en ce que** ledit dispositif de commande (3) présente une interaction avec lesdits moyens actionneurs (7) pour commander la quantité de ladite force de compression.

7. Appareil selon la revendication 5 ou 6, **caractérisé en ce que** lesdits moyens actionneurs (7) sont sélectionnés parmi le groupe comprenant des vérins mécaniques, hydrauliques, pneumatiques, électriques.

8. Appareil selon une quelconque revendication 4 à 7, **caractérisé en ce que** ledit élément supérieur de formation de feuille (6) comprend une pluralité de cônes (10) tournant autour d'un axe sensiblement vertical (Y), chacun desdits cônes (10) tournant également autour d'un axe oblique (Z) pour présenter une interaction avec ladite pâte (P).

9. Appareil selon une quelconque revendication 4 à 8, **caractérisé en ce que** ledit élément inférieur de formation de feuille (5) comprend au moins une plaque de surface (11) et des moyens élastiques (12) disposés sous ladite plaque de surface (11) pour permettre son mouvement dans au moins une direction sensiblement orthogonale à ladite plaque de surface (11).

10. Appareil selon une quelconque revendication précédente, **caractérisé en ce que** lesdits moyens de détection (8) comprennent une ou plusieurs caméras.

11. Appareil selon une quelconque revendication précédente, **caractérisé en ce que** lesdits moyens de détection (8) comprennent un ou plusieurs capteurs.

12. Procédé pour le traitement commandé de pâte (P), pour former une portion de pâte (P) en un élément en forme de disque (D) d'épaisseur et de diamètre prédéterminés, en utilisant un appareil (1) selon une quelconque revendication précédente, **caractérisé en ce qu'**il comprend les étapes de :
- introduction d'une portion de pâte (P) dans ledit dispositif de formation de feuille (2) dudit appareil (1) ;
- détection de l'épaisseur et du diamètre moyen dudit élément en forme de disque (D) en utilisant des moyens de détection de taille (8) positionnés en aval dudit dispositif de formation de feuille (2) ;
- commande des paramètres de formation de feuille dudit dispositif de formation de feuille (2) pour régler l'épaisseur et le diamètre moyen dudit élément en forme de disque (D) pour obtenir des valeurs souhaitées pour lesdites tailles.

13. Procédé de formation de feuille selon la revendication 12, **caractérisé en ce que** ledit dispositif de formation de feuille (2) comprend au moins un élément inférieur de formation de feuille (5) et au moins un élément supérieur de formation de feuille (6) qui fonctionnent sur les côtés opposés de ladite portion de pâte (P) pour réaliser ladite formation de feuille.

14. Procédé de formation de feuille selon la revendication 12 ou 13, **caractérisé en ce que** ladite étape de commande comprend le réglage du fonctionnement de moyens actionneurs (7) appropriés pour déplacer ledit élément supérieur de formation de feuille (6).

15. Procédé de formation de feuille selon une quelconque revendication 12 à 14, **caractérisé en ce que** ladite étape de commande comprend le réglage de moyens élastiques (12) associés à l'élément inférieur de formation de feuille (5) dudit appareil (1).

16. Procédé de formation de feuille selon une quelconque revendication 12 à 15, **caractérisé en ce que** lesdits paramètres destinés à être commandés comprennent un ou plusieurs paramètres sélectionnés parmi une forme de formation de feuille, un écart entre ledit élément inférieur de formation de feuille (5) et ledit élément supérieur de formation de feuille (6), une vitesse de formation de feuille.
